# EUROPEAN PATENT SPECIFICATION

(11) **EP 2 470 587 B1**
(45) Date of publication and mention of the grant of the patent: **06.11.2013**
(21) Application number: 10744638.7
(22) Date of filing: 10.08.2010
(51) Int. Cl.: C08G 73/06, C08K 5/17, C08L 79/04, C08K 5/59, C08L 51/06, C08L 71/02

(54) **POLYBENZOXAZINE COMPOSITION**
POLYBENZOXAZINZUSAMMENSETZUNG
COMPOSITION DE POLYBENZOXAZINE

(30) Priority: 26.08.2009 US 547910
(43) Date of publication of application: 04.07.2012
(73) Proprietor: 3M Innovative Properties Company, Saint Paul, MN 55133-3427 (US)
(72) Inventor: GORODISHER, Ilyer,, Saint Paul, Minnesota 55133-3427 (US)
(74) Representative: Herzog, Fiesser & Partner
(86) International application number: PCT/US2010/044986
(87) International publication number: WO 2011/025652

(56) References cited:
- EP-A1- 0 705 316
- WO-A1-00/00535
- WO-A2-2008/034814

## Description

### Field of the Invention

A process of preparing polybenzoxazines using a pentafluoroantimonic acid catalyst is described.

### Background

Benzoxazines and compositions containing benzoxazine are known (see, for example, U.S. 5,543,516 and 6,207,786 to Ishida et al.; S. Rimdusit and H. Ishida, "Development of New Class of Electronic Packaging Materials Based on Ternary Systems of Benzoxazine, Epoxy, and Phenolic Resins", Polymer, 41, 7941-49 (2000); and H. Kimura et al., "New Thermosetting Resin from Bisphenol A-based Benzoxazine and Bisoxazoline", J. App. Polym. Sci., 72, 1551-58 (1999).

U.S. 7,517,925 (Dershem et al.) describes benzoxazine compounds and thermosetting resin compositions prepared therefrom. The compositions are said to be useful for increasing adhesion at interfaces within microelectronic packages and low shrinkage on cure and low coefficient of thermal expansion (CTE).

U.S. 7,053,138 (Magendie et al.) describes compositions comprising benzoxazines and thermoplastic or thermoset resins in the manufacture of prepregs and laminates. The compositions are said to yield flame-proofed laminating resins that have high glass transition temperatures.

U.S. 6,376,080 (Gallo) describes a method of preparing a polybenzoxazine which includes heating a molding composition including a benzoxazine and a heterocyclic dicarboxylic acid to a temperature sufficient to cure the molding composition, thereby forming the polybenzoxazine. The compositions are said to have near-zero volume change after post cure.

US 6,207,786 (Ishida et al.) states that the polymerization of benzoxazine monomers to a polymer is believed to be an ionic ring opening polymerization which converts the oxazine ring to another structure, e.g.,linear polymer or larger heterocyclic rings. It is thought that a chain transfer step(s) limits the molecular weight of the resulting polymer and causes some branching. FTIR (Fourier transform infrared) analysis is often used to monitor the conversion of the oxazine rings to polymers to provide an estimate of the rate of polymerization at different temperatures. NMR (nuclear magnetic resonance) spectroscopy can also be used to monitor conversion of benzoxazine monomers to polymer.

Epoxy adhesives have been widely used in structural adhesive applications and satisfy many demanding industrial applications. However epoxies have many noted deficiencies that limit their use including limited high temperature stability, high moisture uptake, shrinkage, and a large exotherm on polymerization.

Polybenzoxazines have been proposed to overcome many of the limitations on epoxies. They have lower exotherms on curing, less shrinkage, have higher thermal stability, low byproducts and may be readily prepared from benzoxazines, which in turn, are readily prepared from an amine, formaldehyde and a phenol in high yields. However, current methods of preparing polybenzoxazines require relatively high temperatures, and typically produce brittle, highly crosslinked polymers.

Efforts to reduce the polymerization temperature have included the addition of various phenols or Lewis acid accelerators, or copolymerization of the benzoxazine with epoxides or other monomers such as phenol-formaldehyde. However the resultant polybenzoxazines-epoxy hybrids retain many of the limitations of the epoxies, and compromise many desirable features thereof, such as epoxy toughness.

### Summary

The present disclosure is directed to a curable composition comprising a benzoxazine compound and a pentafluoroantimonic acid catalyst. The curable composition may be cured to produce cured compositions useful in coating, sealants, adhesive and many other applications. The present disclosure further provides a curable composition comprising a benzoxazine compound and a pentafluoroantimonic acid catalyst, which when cured, is useful in high temperature structural adhesive applications. The present disclosure further provides a method of preparing a polybenzoxazine comprising heating the curable composition at a temperature, and for a time sufficient, to effect polymerization.

The present disclosure overcomes many of the deficiencies noted for the polymerization of polybenzoxazines including lower polymerization temperatures and reduced exotherms. In some embodiments, the product polybenzoxazines are flexible solids having good thermal stability, and are useful for many industrial applications.

As used herein, the term "benzoxazine" is inclusive of compounds and polymers having the characteristic benzoxazine ring. In the illustrated benzoxazine group, R is the residue of a mono- or polyamine.

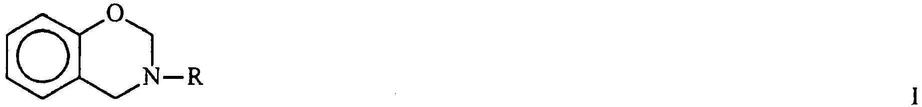

As used herein, "alkyl" includes straight-chained, branched, and cyclic alkyl groups and includes both unsubstituted and substituted alkyl groups. Unless otherwise indicated, the alkyl groups typically contain from 1 to 20 carbon atoms. Examples of "alkyl" as used herein include, but are not limited to, methyl, ethyl, n-propyl, n-butyl, n-pentyl, isobutyl, t-butyl, isopropyl, n-octyl, n-heptyl, ethylhexyl, cyclopentyl, cyclohexyl, cycloheptyl, adamantyl, and norbornyl, and the like. Unless otherwise noted, alkyl groups may be mono- or polyvalent.

As used herein, the term "heteroalkyl" includes both straight-chained, branched, and cyclic alkyl groups with one or more heteroatoms independently selected from S, O, and N both unsubstituted and substituted alkyl groups. Unless otherwise indicated, the heteroalkyl groups typically contain from 1 to 20 carbon atoms. "Heteroalkyl" is a subset of "hetero(hetero)hydrocarbyl" described below. Examples of "heteroalkyl" as used herein include, but are not limited to, methoxy, ethoxy, propoxy, 3,6-dioxaheptyl, 3-(trimethylsilyl)-propyl, 4-dimethylaminobutanyl, and the like. Unless otherwise noted, heteroalkyl groups may be mono- or polyvalent.

As used herein, "aryl" is an aromatic group containing 6-18 ring atoms and can contain fused rings, which may be saturated, unsaturated, or aromatic. Examples of an aryl group include phenyl, naphthyl, biphenyl, phenanthryl, and anthracyl. Heteroaryl is aryl containing 1-3 heteroatoms such as nitrogen, oxygen, or sulfur and can contain fused rings. Some examples of heteroaryl are pyridyl, furanyl, pyrrolyl, thienyl, thiazolyl, oxazolyl, imidazolyl, indolyl, benzofuranyl, and benzthiazolyl. Unless otherwise noted, aryl and heteroaryl, groups may be mono- or polyvalent.

As used herein, "(hetero)hydrocarbyl" is inclusive of (hetero)hydrocarbyl alkyl and aryl groups, and hetero(hetero)hydrocarbyl heteroalkyl and heteroaryl groups, the later comprising one or more catenary oxygen heteroatoms such as ether or amino groups. Hetero(hetero)hydrocarbyl may optionally contain one or more catenary (in-chain) functional groups including ester, amide, urea, urethane and carbonate functional groups. Unless otherwise indicated, the non-polymeric (hetero)hydrocarbyl groups typically contain from 1 to 60 carbon atoms. Some examples of such (hetero)hydrocarbyls as used herein include, but are not limited to, methoxy, ethoxy, propoxy, 4-diphenylaminobutyl, 2-(2'-phenoxyethoxy)ethyl, 3,6-dioxaheptyl, 3,6-dioxahexyl-6-phenyl, in addition to those described for "alkyl", "heteroalkyl", "aryl" and "heteroaryl" *supra.*

As used herein, the term "residue" is used to define the (hetero)hydrocarbyl portion of a group remaining after removal (or reaction) of the attached functional groups, or the attached groups in a. depicted formula. For example, the "residue" of butyraldehyde, C₄H₉-CHO is the monovalent alkyl C₄H₉-. The residue of hexamethylene diamine, H₂N-C₆H₁₂-NH₂ is the divalent alkyl -C₆H₁₂-. The residue of phenylene diamine H₂N-C₆H₄-NH₂, is the divalent aryl -C₆H₄-. The residue of diamino-polyethylene glycol, H₂N-(C₂H₄O)₁₋₂₀-C₂H₄-NH₂, is the divalent (hetero)hydrocarbyl polyethylene glycol-(C₂H₄O)₁₋₂₀-C₂H₄-.

### Brief Description of the Drawing

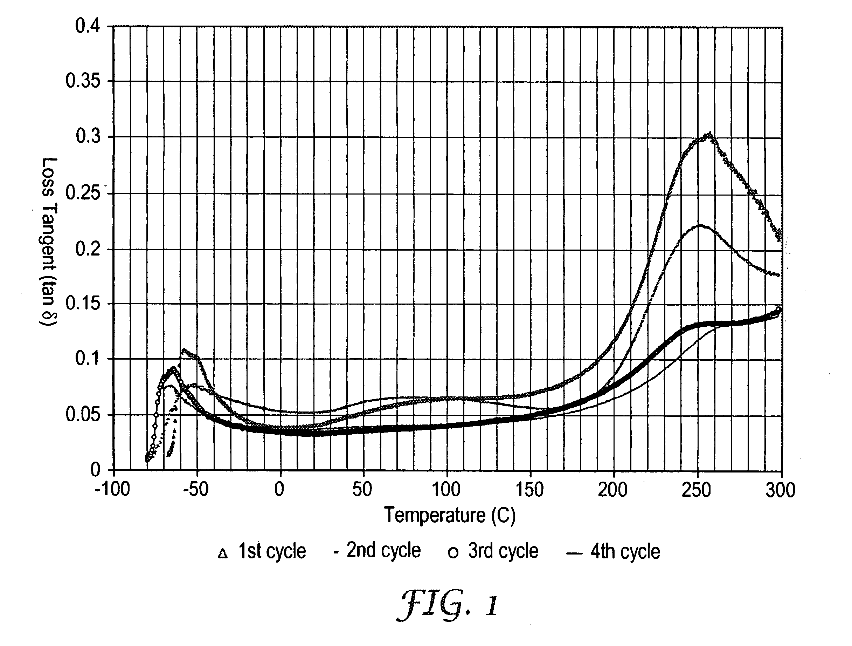

Figure 1 is a plot of the dynamic mechanical analysis (DMA) of Example 7.

### Detailed Description

In the preparation of the polybenzoxazine, any benzoxazine compound may be used. Benzoxazines may be prepared by combining a phenolic compound, and aliphatic aldehyde, and a primary amine compound. U.S. 5,543,516 (Ishida) and U.S. 7,041,772 (Aizawa et al.) describe methods of forming benzoxazines. Other suitable reaction schemes to produce mono-, di- and higher-functional benzoxazines are described in N.N. Ghosh et al., Polybenzoxazine-new high performance thermosetting resins: synthesis and properties, Prog. Polym. Sci. 32 (2007), pp. 1344-1391.

One suitable method of producing the starting benzoxazine compounds is illustrated by the following reaction scheme: 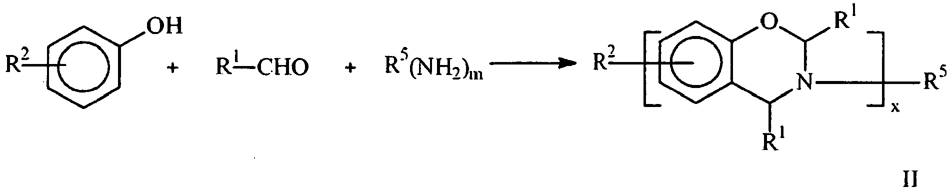 wherein
each R¹ is H or an alkyl group, and is the residue of an aliphatic aldehyde,
R² is H, a covalent bond, or a polyvalent (hetero)hydrocarbyl group, preferably H, a covalent bond or a divalent alkyl group;
R⁵ is the (hetero)hydrocarbyl residue of a primary amino compound, R⁵(NH₂)ₘ, where m is 1-4; and
x is at least 1.

When polymerized, compounds of Formula II undergo ring opening to produce polymers of the general Formula III and/or IV: 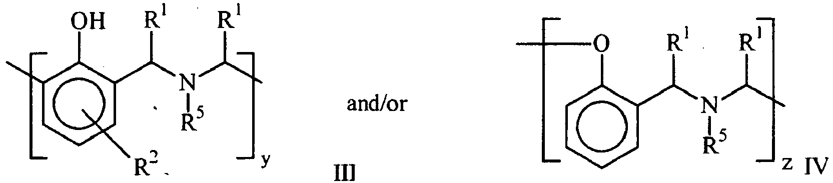 wherein
each R¹ is H or an alkyl group, and is the residue of an aliphatic aldehyde,
R² is H, a covalent bond, or a polyvalent (hetero)hydrocarbyl group, preferably H, a covalent bond or a divalent alkyl group;
R⁵ is the (hetero)hydrocarbyl residue of a primary amino compound, R⁵(NH₂)ₘ, where m is 1-4; and
y and z are at least 2.

A monophenol is illustrated for simplicity. Mono- or polyphenolic compounds may be used. The phenolic compound may be further substituted without limitation is desired. For example, the 3, 4, and 5 positions of the phenolic compound may be hydrogen or substituted with other suitable substituents such as alkyl, cycloalkyl, heterocycloalkyl, aryl, heteroaryl, aralkyl, heteroaralkyl, alkoxy, alkoxyalkylene, hydroxylalkyl, hydroxyl, haloalkyl, carboxyl, halo, amino, aminoalkyl, alkylcarbonyloxy, alkyloxycarbonyl, alkylcarbonyl, alkylcarbonylamino, aminocarbonyl, alkylsulfonylamino, aminosulfonyl, sulfonic acid, or alkylsulfonyl. Desirably at least one of the positions ortho to the hydroxyl group is unsubstituted to facilitate benzoxazine ring formation.

The aryl ring of the phenolic compound may be a phenyl ring as depicted, or may be selected from naphthyl, biphenyl, phenanthryl, and anthracyl. The aryl ring of the phenolic compound may further comprise a heteroaryl ring containing 1-3 heteroatoms such as nitrogen, oxygen, or sulfur and can contain fused rings. Some examples of heteroaryl are pyridyl, furanyl, pyrrolyl, thienyl, thiazolyl, oxazolyl, imidazolyl, indolyl, benzofuranyl, and benzthiazolyl.

Examples or mono-functional phenols include phenol; cresol; 2-bromo-4-methylphenol; 2-allyphenol; 4-aminophenol; and the like. Examples of difunctional phenols (polyphenolic compounds) include phenolphthalein; biphenol; 4-4'-methylene-diphenol; 4-4'-dihydroxybenzophenone; bisphenol-A; 1,8-dihydroxyanthraquinone; 1,6-dihydroxnaphthalene; 2,2'-dihydroxyazobenzene; resorcinol; fluorene bisphenol; and the like. Examples of trifunctional phenols comprise 1,3,5-trihydroxy benzene and the like.

The aldehyde reactants used in preparing the benzoxazine starting materials include formaldehyde; paraformaldehyde; polyoxymethylene; as well as aldehydes having the general formula R¹CHO, where R¹ is H or an alkyl group, including mixtures of such aldehydes, desirably having from 1 to 12 carbon atoms. The R¹ group may be linear or branched, cyclic or acyclic, saturated or unsaturated, or combinations thereof. Other useful aldehydes include crotonaldehyde; acetaldehyde; propionaldehyde; butyraldehyde; and heptaldehyde.

Amino compounds useful in preparing the starting benzoxazine can be substituted or unsubstituted, mono-, di-substituted or higher (hetero)hydrocarbyl amines having at least one primary amine group. The amines may be aliphatic or aromatic amines. It can be substituted, for example, with groups such as alkyl, cycloalkyl, heterocycloalkyl, aryl, heteroaryl, aralkyl, or heteroaralkyl.

Amines useful in the preparation of the starting benzoxazine compounds include those of the formula R⁵(NH₂)ₘ include (hetero)hydrocarbyl monoamines and polyamines. R⁵ may be a (hetero)hydrocarbyl group that has a valence of m, and is the residue of a mono-, di- or higher amine having at least one primary amine group. R⁵ can be an alkyl, a cycloalkyl or aryl and m 1 to 4. The R⁵ is preferably selected from mono- and polyvalent (hetero)hydrocarbyl (i.e., alkyl and aryl compounds having 1 to 30 carbon atoms, or alternatively (hetero)hydrocarbyl including heteroalkyl and heteroaryl having 1 to twenty heteroatoms of oxygen). In some embodiments, R⁵ is a poly(alkyleneoxy) group, such as a poly(ethyleneoxy), poly(propyleneoxy) or poly(ethyleneoxy-co-propyleneoxy) group.

In one embodiment, R⁵ comprises a non-polymeric aliphatic, cycloaliphatic, aromatic or alkyl-substituted aromatic moiety having from I to 30 carbon atoms. In another embodiment, R⁵ comprises a polymeric polyoxyalkylene, polyester, polyolefin, poly(meth)acrylate, polystyrene or polysiloxane polymer having pendent or terminal reactive -NH₂ groups. Useful polymers include, for example, amine-terminatedoligo- and poly- (diaryl)siloxanes and (dialkyl)siloxane amino terminated polyethylenes or polypropylenes, and amino terminated poly(alkylene oxides). Useful polyamines also include polydialkylsiloxanes with pendent or terminal amino groups.

Any primary amine may be employed. Useful monoamines include, for example, methyl-, ethyl-, propyl-, hexyl-, octyl, dodecyl-, dimethyl-, methyl ethyl-, and aniline. The term "di-, or polyamine," refers to organic compounds containing at least two primary amine groups. Aliphatic, aromatic, cycloaliphatic, and oligomeric di- and polyamines all are considered useful in the practice of the invention. Representative of the classes of useful di- or polyamines are 4,4'-methylene dianiline, 3,9-bis-(3-aminopropyl)-2,4,8,10-tetraoxaspiro[5,5]undecane, and polyoxyethylenediamine. Useful diamines include N-methyl-1,3-propanediamine; N-ethyl-1,2-ethanediamine; 2-(2-aminoethylamino)ethanol; pentaethylenehexaamine; ethylenediamine; N-methylethanolamine; and 1,3-propanediamine.

Examples of useful polyamines include polyamines having at least two amino groups, wherein at least one of the amino groups are primary, and the remaining may be primary, secondary, or a combination thereof. Examples include H₂N(CH₂CH₂NH)₁₋₁₀H, H₂N(CH₂CH₂CH₂CH₂NH)₁₋₁₀H, H₂N(CH₂CH₂CH₂CH₂CH₂CH₂NH)₁₋₁₀H, H₂N(CH₂)₃NHCH₂CH=CHCH₂NH(CH₂)₃NH₂, H₂N(CH₂)₄NH(CH₂)₃NH₂, H₂N(CH2)₃NH(CH₂)₄NH(CH₂)₃NH₂, H₂N(CH₂)₃NH(CH₂)2NH(CH₂)3NH₂, H₂N(CH₂)₂NH(CH₂)₃NH(CH₂)₂NH₂, H₂N(CH₂)₃NH(CH₂)₂NH₂, C₆H₅NH(CH₂)₂NH(CH₂)₂NH₂, and N(CH₂CH₂NH₂)₃, and polymeric polyamines such as linear or branched (including dendrimers) homopolymers and copolymers of ethyleneimine (i.e., aziridine). Many such compounds can be obtained, or are available, from general chemical suppliers such as, for example, Aldrich Chemical Company, Milwaukee, WI or Pfaltz and Bauer, Inc., Waterbury, CN.

In some embodiments, benzoxazines derived from aliphatic polyamines, including poly(alkyleneoxy)polyamines, are preferred. As used herein, the phrase "derived from" refers to a structural limitation whereby the benzoxazine contains the residue of a polyamine, not a process limitation. It has been found that the polybenzoxazines derived from aliphatic polyamines are more flexible (as measured by dynamic mechanical analysis, DMA) than those polybenzoxazines derived from aromatic amines, such as aniline. Such aliphatic amine-derived benzoxazines may be copolymerized with aromatic amine derived benzoxazines to provide copolymeric polybenzoxazines.

The aliphatic polyamine may also be provided by a poly(alkyleneoxy)polyamine. The resultant polybenzoxazines contains the residue of a poly(alkyleneoxy)polyamines. Poly(alkyleneoxy)polyamines useful in making benzoxazines for subsequent polymerization can be selected from the following structures
H₂N-R⁶-O-(R⁷O)ₚ-(R⁸O)_{q}-(R⁷O)ᵣ -R⁶-NH₂, i.e., poly(alkyleneoxy) diamines); or [H₂N-R⁶ O-(R⁷O)ₚ-]ₛ -R⁹, wherein

R⁶, R⁷ and R⁸ are alkylene groups having 1 to 10 carbon atoms and may be the same or may be different. Preferably, R⁶ is an alkyl group having 2 to 4 carbon atoms such as ethyl, n-propyl, isopropyl, n-butyl or isobutyl. Preferably, R⁷ and R⁸ are alkyl groups having 2 or 3 carbon atoms such as ethyl, n-propyl or isopropyl. R⁹ is the residue of a polyol used to prepare the poly(alkyleneoxy)polyamines (i.e., the organic structure that remains if the hydroxyl groups are removed). R⁹ may be branched or linear, and substituted or unsubstituted (although substituents should not interfere with oxyalkylation reactions).

The value of p is ≥1, more preferably about 1 to 150, and most preferably about 1 to 20. Structures in which p is 2, 3 or 4 are useful too. The value of q and r are both ≥0. The value of s is >2, more preferably 3 or 4 (so as to provide, respectively, polyoxyalkylene triamines and tetraamines). It is preferred that the values of p, q, r and s be chosen such that the resulting complex is a liquid at room temperature as this simplifies handling and mixing thereof. Usually, the poly(alkyleneoxy)polyamines is itself a liquid. For the polyoxyalkylene, molecular weights of less than about 5,000 may be used, although molecular weights of about 1,000 or less are more preferred, and molecular weights of about 250 to 1,000 are most preferred.

Examples of particularly preferred poly(alkyleneoxy) polyamines include polyethyleneoxidediamine, polypropyleneoxidediamine, polypropyleneoxidetriamine, diethyleneglycolpropylenediamine, triethyleneglycolpropylenediamine, polytetramethyleneoxidediamine, polyethyleneoxide-co-polypropyleneoxidediamine, and polyethyleneoxide-co-polyproyleneoxidetriamine.

Examples of suitable commercially available poly(alkyleneoxy)polyamines include various JEFFAMINES from Huntsman Chemical Company such as the D, ED, and EDR series diamines (e.g., D-400, D-2000, D-5000, ED-600, ED-900, ED-2001, and EDR-148), and the T series triamines (e.g., T-403), as well as H221 from Union Carbide Company.

Many di- and polyamines, such as those just named, are available commercially, for example, those available from Huntsman Chemical, Houston, TX. The most preferred di- or polyamines include aliphatic di- and triamines or aliphatic di- or polyamines and more specifically compounds with two or three primary amino groups, such as ethylene diamine, hexamethylene diamine, dodecanediamine, and the like. Useful commercial polydialkylsiloxanes having terminal or pendent amine groups include PDMS Diamine 5k, 10k or 15k from 3M Company or Tegomer™ A-Si 2120 or 2130 from Th. Goldschmidt; or DMS™-A11, A12, A15, A25 or A32, AMS™-132, 152, 162, and 232, ATM™-1112 from Gelest; or Rhodosil™ 21643 and 21644, 21642 and 21637 from Rhone-Poulenc.

Other useful amines include amino acids such as glycine, alanine, and leucine and their methyl esters, aminoalcohols such as ethanolamine, 3-aminopropanol, and 4-aminobutanol, polyaminoethers containing ethylene glycol and diethylene glycol (such as Jeffamine™ diamines), and alkenyl amines such as allylamine and butenylamine.

It will be understood that monoamines will cyclize with the aldehyde and phenolic compound to produce mono-benzoxazine compounds, while di- or higher amines will cyclize to produce di- and poly- benzoxazine compounds: For example, a diamine (m = 2 in the Scheme VI below) will produce a di-benzoxazine. 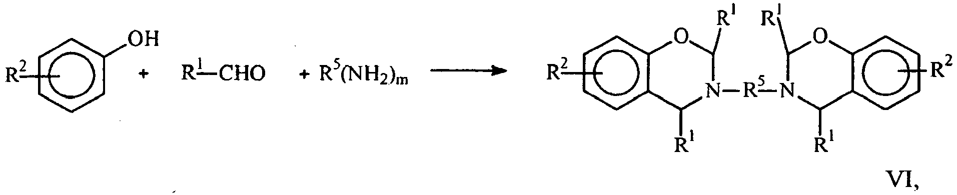 wherein each R¹ is H or an alkyl group, and is the residue of an aliphatic aldehyde;
R² is H, a covalent bond, or a polyvalent (hetero)hydrocarbyl group, preferably H, a covalent bond or a divalent alkyl group;
R⁵ is the (hetero)hydrocarbyl residue of a primary amino compound.

Further, polymeric benzoxazines may be prepared from a polyphenolic compounds, such as bisphenol-A, and a di-or polyamine, which may be further ring-opening polymerized. per the method described herein. 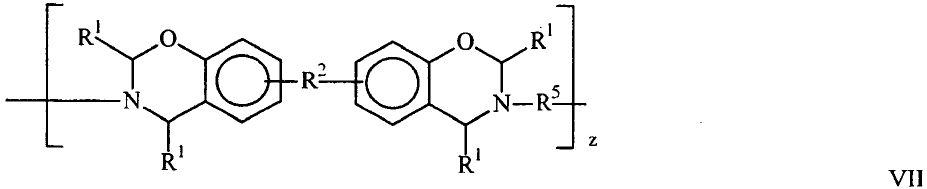 wherein
each R¹ is H or an alkyl group, and is the residue of an aliphatic aldehyde,
R² is H, a covalent bond, or a polyvalent (hetero)hydrocarbyl group, preferably H, a covalent bond or a divalent alkyl group;
R⁴ is the (hetero)hydrocarbyl residue of a primary amino compound;
R⁵ is the (hetero)hydrocarbyl residue of a primary amino compound;
z is at least 1, preferably 2 or greater.

In some preferred embodiments, the curable composition comprises benzoxazines derived from aryl amines. In some embodiments, the curable composition comprises benzoxazines derived from aliphatic amines. In some preferred embodiments, the curable composition comprises a mixture of benzoxazines derived from both aliphatic and aryl amines. Preferably, in such embodiments, the aliphatic polyamine is a poly(alkyleoxy) di-or polyamine

The catalyst of the curable composition comprises a liquid salt of a substituted pentafluoroantimonic acid. The substituted pentafluoroantimonic acid has the formula H⁺ SbF₅ X⁻ wherein X is halogen, hydroxy, or -OR. In the foregoing formula, "-OR" is the residue of an aliphatic or aromatic alcohol having a molecular weight less than about 10,000 and a primary or secondary hydroxy functionality of at least 1, preferably at least 2. The most preferred alcohol is diethylene glycol, which makes the "OR" group 2-(2-hydroxyethoxy)ethoxy. Examples of such catalysts are disclosed in U.S. 4,503,211 (Robins), referred to hereinabove. The amount of catalyst useful in the composition of the instant invention varies between about 0.1% and 15.0%, preferably between about 1.0% and 5.0%, based on the weight of benzoxazine used. The polybenzoxazine will contain the residue of these catalysts, antimony fluoride salts, contained within the polymer matrix in approximate the same weight ratios, and can be detected by standard analytical methods.

The substituted antimonic acids are prepared by the addition of one mole of antimony pentafluoride in sulfur dioxide or other suitable solvent to one mole of hydrogen halide, such as HF, HCl, HBr or HI, or water to form hexafluoroantimonic acid, chloropentafluoroantimonic acid, bromopentafluoroantimonic acid, iodopentafluoroantimonic acid, or hydroxypentafluoroantiomonic acid, respectively.

In many preferred embodiments, X is OR. It is prepared by mixing one molar equivalent of antimony pentafluoride with one or more molar equivalents of an alcohol that is liquid at the reaction temperature. Conveniently, the catalyst is prepared by the addition of one part by weight of antimony pentafluoride to one to ten parts by weight of alcohol. In this method, alcohol used in excess of one mole per mole of antimony pentafluoride serves as a solvent. In place of the solvent alcohol (i.e., alcohol in excess of an equivalent of antimony pentafluoride) other electron donating solvents such as diethyl ether, diglyme, and sulfur dioxide may be used.

Alcohols having a hydroxyl functionality of at least one may be used as a co-reactant and solvent in the preparation of the liquid salt of a substituted pentafluoroantimonic acid of the curable benzoxazine resin composition. Such alcohols may be any aliphatic or aromatic alcohol or a liquid mixture of one or more solid alcohols with one or more liquid alcohols.

Representative examples of suitable aliphatic alcohols having a hydroxy functionality of one include alkanols, monoalkyl ethers of polyoxyalkylene glycols, monoalkyl ethers of alkylene glycols, and others known to the art.

Representative examples of suitable monomeric aliphatic alcohols having a hydroxyl functionality greater than one include alkylene glycols (e.g., 1,2-ethanediol, 1,3-propanediol, 1,4-butanediol, 2-ethyl-1,6-hexanediol, bis(hydroxymethyl)cyclohexane, 1,18-dihydroxyoctadecane, 3-chloro-1,2-propanediol), polyhydroxyalkanes (e.g., glycerine, trimethylolethane, pentaerythritol, sorbitol) and other polyhydroxy compounds such as N,N-bis(hydroxyethyl)benzamide, 2-butyne-1,4-diol, 4,4'-bis(hydroxymethyl)diphenylsulfone, castor oil, etc.

Representative examples of suitable glycols include polyoxyethylene and polyoxypropylene glycols and triols having molecular weights from about 106 to about 10,000 corresponding to equivalent weight of 53 to 5,000 for the diols or 70 to 3,300 for triols; polytetramethylene glycols of varying molecular weight; copolymers of hydroxypropyl and hydroxyethyl acrylates and methacrylates with other free radical-polymerizable monomers such as acrylate esters, vinyl halides, or styrene; copolymers containing pendent hydroxy groups formed by hydrolysis or partial hydrolysis of vinyl acetate copolymers, polyvinylacetal resins containing pendent hydroxy groups; modified cellulose polymers such as hydroxyethylated and hydroxypropylated cellulose; hydroxy-terminated polyesters and hydroxy-terminated polylactones; and hydroxy-terminated polyalkadienes. Especially preferred are di, tri-, and tetraethylene glycol.

Useful commercially available aliphatic alcohols include glycols commercially available as Polymeg™ (available from Quaker Oats Company) including, for example, polytetramethylene ether glycols such as Polymeg™ 650, 1000 and 2000; glycols commercially available as Pep™ (available from Wyandotte Chemicals Corporation including polycaprolactone polyols such as PCP™ 0200, 0210, 0230, 0240, 0300; aliphatic polyester diols available as Paraplex™ U-148"(available from Rohm and Haas); saturated polyester polyols available as Multron™ (available from Mobay Chemical Co.) such as Multron™ R-2, R-12A, R-16, R-18, R-38, R-68 and R-74; hydroxypropylated cellulose having an equivalent weight of approximately 100 available as Klucel E™ from Hercules Inc.

Representative examples of suitable aromatic alcohols include phenols such as phenol, cardinol, m-cresol, 2-methyl-5-isopropylphenol (carvacrol), 3-methyl-6-tertbutylphenol, 2,4-dimethyl-6-tert-butyl phenol, guaiacol, m-, o-, and p-chlorophenol.

The amount of alcohol used in the compositions of the invention depends upon factors such as compatibility of the hydroxyl-containing material with the benzoxazine, the equivalent weight and functionality of the hydroxy-containing material, the physical properties desired in the final cured compositions, the desired speed of cure, etc.

Although both mono-functional and poly-functional hydroxy-containing materials provide desirable results in the compositions of the invention, use of the poly-functional hydroxy-containing materials is highly preferred for a majority of applications, although the mono-functional hydroxy-containing materials are particularly effective in providing low viscosity, solvent-free coating compositions. Accordingly, when using mono-functional hydroxy materials, it is preferred that the equivalent weight thereof be no greater than about 250.

Mixtures of hydroxyl-containing materials may be used, when desired. For example, one may use mixtures of two or more poly-functional hydroxy materials, one or more mono-functional hydroxy materials with poly-functional hydroxy materials, etc.

The polymerization of benzoxazine monomers to a polymer is believed to be an ionic ring opening polymerization which converts the oxazine ring to another structure, e.g., linear polymer or larger heterocyclic rings. It is thought that a chain transfer step(s) limits the molecular weight of the resulting polymer and causes some branching. NMR (nuclear magnetic resonance) spectroscopy can also be used to monitor conversion of benzoxazine monomers to polymer. As is known, a mixture of phenoxy and phenolic repeat units may result. The residue of the catalyst may be detected in the matrix of the polymer. 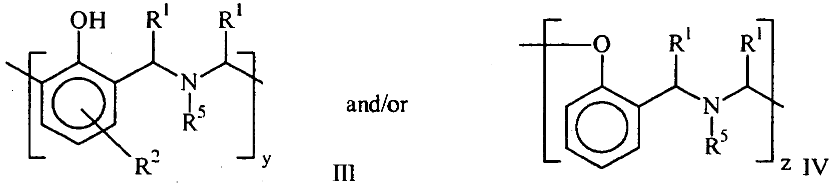 wherein
each R¹ is H or an alkyl group, and is the residue of an aliphatic aldehyde,
R² is H, a covalent bond, or a polyvalent (hetero)hydrocarbyl group, preferably H, a covalent bond or a divalent alkyl group;
R⁵ is the (hetero)hydrocarbyl residue of a primary amino compound, R⁵(NH₂)ₘ, where m is 1-4; and
y and z are at least 2.

Reaction conditions for curing the composition depend on the reactants and amounts used and can be determined by those skilled in the art. The curable compositions are made by mixing in any order the benzoxazine compound and the catalyst described above. Generally, the composition is then heated to a temperature between about 50 and 200°C, preferably between about 130-180°C, for a time of about 1-120 minutes.

Suitable sources of heat to cure the compositions of the invention include induction heating coils, ovens, hot plates, heat guns, infrared sources including lasers, microwave sources. Suitable sources of light and radiation include ultraviolet light sources, visible light sources, and electron beam sources.

Solvents can be used to assist in dissolution of the catalyst in the polymerizable monomers, and as a processing aid. It may be advantageous to prepare a concentrated solution of the catalyst in a small amount of solvent to simplify the preparation of the polymerizable composition. Useful solvents are lactones, such as gamma-butyrolactone, gamma-valerolactone; and epsilon-caprolactone; ketones such as acetone, methyl ethyl ketone, methyl isobutyl ketone, cyclopentanone and cyclohexanone; sulfones, such as tetramethylene sulfone, 3-methylsulfolane, 2,4-dimethylsulfolane, butadiene sulfone, methyl sulfone, ethyl sulfone, propyl sulfone, butyl sulfone, methyl vinyl sulfone, 2-(methylsulfonyl)ethanol, 2,2'-sulfonyldiethanol; sulfoxides, such as dimethyl sulfoxide; cyclic carbonates such as propylene carbonate, ethylene carbonate and vinylene carbonate; carboxylic acid esters such as ethyl acetate, methyl cellosolve acetate, methyl formate; and other solvents such as methylene chloride, nitromethane, acetonitrile, glycol sulfite and 1,2-dimethoxyethane (glyme).

Adjuvants may optionally be added to the compositions such as colorants, abrasive granules, anti-oxidant stabilizers, thermal degradation stabilizers, light stabilizers, conductive particles, tackifiers, flow agents, bodying agents, flatting agents, inert fillers, binders, blowing agents, fungicides, bactericides, surfactants, plasticizers, rubber tougheners and other additives known to those skilled in the art. They also can be substantially unreactive, such as fillers, both inorganic and organic. These adjuvants, if present, are added in an amount effective for their intended purpose.

In some embodiments, a toughening agent may be used. The toughening agents which are useful in the present invention are polymeric compounds having both a rubbery phase and a thermoplastic phase such as: graft polymers having a polymerized, diene, rubbery core and a polyacrylate, polymethacrylate shell; graft polymers having a rubbery, polyacrylate core with a polyacrylate or polymethacrylate shell; and elastomeric particles polymerized in situ in the epoxide from free radical polymerizable monomers and a copolymerizable polymeric stabilizer.

Examples of useful toughening agents of the first type include graft copolymers having a polymerized, diene, rubbery backbone or core to which is grafted a shell of an acrylic acid ester or methacrylic acid ester, monovinyl aromatic hydrocarbon, or a mixture thereof, such as disclosed in U.S. 3,496,250 (Czerwinski). Preferable rubbery backbones comprise polymerized butadiene or a polymerized mixture of butadiene and styrene. Preferable shells comprising polymerized methacrylic acid esters are lower alkyl (C₁-C₄) substituted methacrylates. Preferable monovinyl aromatic hydrocarbons are styrene, alphamethylstyrene, vinyltoluene, vinylxylene, ethylvinylbenzene, isopropylstyrene, chlorostyrene, dichlorostyrene, and ethylchlorostyrene. It is important that the graft copolymer contain no functional groups that would poison the catalyst.

Examples of useful toughening agents of the second type are acrylate core-shell graft copolymers wherein the core or backbone is a polyacrylate polymer having a glass transition temperature below about 0° C., such as polybutyl acrylate or polyisooctyl acrylate to which is grafted a polymethacrylate polymer (shell) having a glass transition above about 25 ° C., such as polymethylmethacrylate.

The third class of toughening agents useful in the invention comprises elastomeric particles that have a glass transition temperature (T_{g}) below about 25 ° C. before mixing with the other components of the composition. These elastomeric particles are polymerized from free radical polymerizable monomers and a copolymerizable polymeric stabilizer that is soluble in the benzoxazine. The free radical polymerizable monomers are ethylenically unsaturated monomers or diisocyanates combined with coreactive difunctional hydrogen compounds such as diols, diamines, and alkanolamines.

Useful toughening agents include core/shell polymers such as methacrylate-butadiene-styrene (MBS) copolymer wherein the core is crosslinked styrene/butadiene rubber and the shell is polymethylacrylate (for example, ACRYLOID KM653 and KM680, available from Rohm and Haas, Philadelphia, PA), those having a core comprising polybutadiene and a shell comprising poly(methyl methacrylate) (for example, KANE ACE M511, M521, B11A, B22, B31, and M901 available from Kaneka Corporation, Houston, TX and CLEARSTRENGTH C223 available from ATOFINA, Philadelphia, PA), those having a polysiloxane core and a polyacrylate shell (for example, CLEARSTRENGTH S-2001 available from ATOFINA and GENIOPERL P22 available from Wacker-Chemie GmbH, Wacker Silicones, Munich, Germany), those having a polyacrylate core and a poly(methyl methacrylate) shell (for example, PARALOID EXL2330 available from Rohm and Haas and STAPHYLOID AC3355 and AC3395 available from Takeda Chemical Company, Osaka, Japan), those having an MBS core and a poly(methyl methacrylate) shell (for example, PARALOID EXL2691A, EXL2691, and EXL2655 available from Rohm and Haas); and the like; and mixtures thereof. Preferred modifiers include the above-listed ACRYLOID and PARALOID modifiers; and the like; and mixtures thereof.

The toughening agent is useful in an amount equal to about 3-35%, preferably about 5-25%, based on the weight of the benzoxazine. The toughening agents of the instant invention add strength to the composition after curing without reacting with the benzoxazine or interfering with curing.

Compositions of this invention are useful for coatings, foams, shaped articles, adhesives (including structural and semistructural adhesives), magnetic media, filled or reinforced composites, coated abrasives, caulking and sealing compounds, casting and molding compounds, potting and encapsulating compounds, impregnating and coating compounds, conductive adhesives for electronics, protective coatings for electronics, and other applications that are known to those skilled in the art. When uncured or partially cured, the benzoxazine compositions exhibit pressure-sensitive adhesive properties, including tack. In some embodiments, the present disclosure provides a coated article comprising a substrate, having a cured coating of the benzoxazine thereon.

To prepare a structural/semi-structural benzoxazine adhesive, the curable composition could contain additional adjuvants such as silica fillers, glass bubbles and tougheners. These adjuvants add toughness to and reduce the density of the cured composition.

In some embodiments, the present disclosure provides "B-stagable" adhesives. Processing applications such as printed circuit manufacture often employ "stageable" adhesives, that is, adhesive compositions which can be partially cured to a tacky or tack-free coating, fastened to an adherend, and cured using heat, pressure, or both (see. U.S. 4,118,377). The tack-free state is sometimes referred to as the "B-Stage".

The present disclosure provides stagable adhesive compositions comprising benzoxazine compounds and the acid catalyst. The stagable adhesive composition may be coated on to an adherend or substrate, and fully cured to a structural or semistructural adhesive using heat.

In some embodiments, the partially cured, stagable adhesive composition may be disposed between two substrates (or adherends), and subsequently heated to fully cure the adhesive and effect a structural or semistructual bond between the substrates. In other embodiments, the stagable adhesive composition may be heated to a flowable viscosity to effect coating of a substrate, which may then be joined to a second substrate while still molten and full curing effected.

Therefore the present disclosure provides stagable, structural and semi-structural adhesives. "Semi-structural adhesives" are those cured adhesives that have an overlap shear strength of at least about 0.5 MPa, more preferably at least about 1.0 MPa, and most preferably at least about 1.5 MPa. Those cured adhesives having particularly high overlap shear strength, however, are referred to as structural adhesives. "Structural adhesives" are those cured adhesives that have an overlap shear strength of at least about 3.5 MPa, more preferably at least about 5 MPa, and most preferably at least about 7 MPa.

To prepare protective coatings, the choice of materials depends on the needs of the specific application. Abrasion resistant coatings are generally hard and require a significant portion of the formulation to be a hard resin, which are generally short chain length and have high functionality. Coatings undergoing some flex require toughness which can be obtained by lowering the crosslink density of the cure formulation. Clear coatings require the cured resins to have little to no phase separation. This is obtained by controlling the compatibility of the resins or controlling phase separation by cure rate. Adjuvants could be added to these coating formulations in an amount effective for their intended use.

The composition may be coated onto substrates at useful thicknesses ranging from 25-500 micrometers or more. Coating can be accomplished by any conventional means such as roller, dip, knife, or extrusion coating. Solutions of the curable composition may be used to facilitate coating. Stable thicknesses are necessary to maintain the desired coating thickness prior to crosslinking of the composition to form the crosslinked composition.

Useful substrates can be of any nature and composition, and can be inorganic or organic. Representative examples of useful substrates include ceramics, siliceous substrates including glass, metal, natural and man-made stone, woven and nonwoven articles, polymeric materials, including thermoplastic and thermosets, (such as polymethyl (meth)acrylate), polycarbonate, polystyrene, styrene copolymers, such as styrene acrylonitrile copolymers, polyesters, polyethylene terephthalate), silicones, paints (such as those based on acrylic resins), powder coatings (such as polyurethane or hybrid powder coatings), and wood and composites of the foregoing materials.

The instant disclosure further provides a pressure-sensitive adhesive which comprises a coating of the uncured or partially cured benzoxazine composition on a suitable substrate, such as an adhesive tape backing. A preferred method of preparing a pressure-sensitive adhesive article comprises partially curing the novel composition to a useful coating viscosity, coating the partially crosslinked composition onto a substrate (such as a tape backing) and further curing the composition. Useful coating viscosities are generally in the range of 500 to 10,000 cps (0.5 to 10 Pa*s).

### Examples

All parts, percentages, ratios, etc. in the examples are by weight, unless noted otherwise. Solvents and other reagents used were obtained from Sigma-Aldrich Chemical Company; Milwaukee, WI, unless specified differently.

### Materials

Benzoxazine A: XU3560™ benzoxazine is bis(3-phenyl-3,4-dihydro-2H,3-benzoxazinyl)isopropane, a bisphenol-derived benzoxazine, available from Huntsman. Corporation, The Woodlands, TX.

JEFFAMINES™ D400, and D2000 are poly(oxyalkylenes) terminal diamines having molecular weights of about 400 and 2000, respectively. All JEFFAMINEs were obtained from Huntsman. Corporation.

Benzoxazine B* was prepared using Benzoxazine B (a JEFFAMINE™ D400-based benzoxazine described below) and compounded with 25% by weight silicone-based core-shell particles) obtained from Kaneka Texas Corporation, Pasadena, TX.

Benzoxazine A* was prepared using Benzoxaxine A. (60% wt), MEK (20% wt) and core-shell particles (20% wt) by Kaneka Texas Corp, as EPX MX 93X.

### Test Methods

### Cohesive Strength Method (Lap Shear Strength Testing)

Lap shear specimens were made using 4" x 7" x 0.063" (101.6 x 178 x 1.6 mm) 7075 T6 bare aluminum that had been anodized according to Boeing Aircraft Company Specification BAC-5555. The anodization voltage was 22.5 volts. The specimen was generated as described in ASTM Specification D-1002-45.

A strip of approximately ½" x 10 mils (∼1.2 x .025 mm) of the benzoxazine adduct was applied to one edge of each of the two anodized aluminum adherends using a scraper. Three 5 mil (0.0125 mm) diameter piano wires were used as spacers for bondline thickness control. The bond was closed and taped on the edge. The bond was placed between sheets of aluminum foil and pieces of cardboard. Two 14 pound (6.350g) steel plates were used to apply pressure to provide for adhesive spreading. The assembly was placed into an oven heated to 130°C for 1 hour and the samples were then tested at room temperature after cooling or when they were hot as specified.

If the material had to be coated hot (as specified for specific examples), anodized 7075 T6 aluminum substrates and the shear sample knife (10 mil gap, ~.025 mm) and the peel sample knife (10 mil gap, 0.025 mm) were all kept at 100° C oven, and used to spread the adhesive immediately after their removal therefrom, using the T-peel and shear procedure detailed above. Furthermore, samples were coated with the adhesive while the adherents were placed on top of a hot plate surface kept at 100° C.

After the adhesive had been allowed to cool to room temperature, the larger specimen was cut into 1" (2.54 cm) wide samples, providing a ½ square inch (3.2258 cm²) bonded area. Six lap shear samples were obtained from each larger specimen. The bonds were tested to failure at room temperature on a Sintech Tensile Testing machine using a crosshead displacement rate of 0.1"/min (0.254 cm/min). The failure load was recorded. The lap width was measured with a vernier caliper. The lap shear strengths are calculated as (2 x failure load)/measured width. The average and standard deviation were calculated from the results of six tests. The lap shear strength was 2174 lbs/in² (~15 MPa).

### T-Peel Test Method

T-peel values were measured using 4" x 8" x 0.025" (101.6 mm x 203.2 mm x 0.635 mm) 7075 T6 bare aluminum that had been anodized as described above. The test was as described in ASTM D-1876; Standard Test Method for Peel Resistance of Adhesives (T-Peel Test," Annual Book of ASTM Standards, vol. 15.06, pp. 115-117 (1995).

A strip of approximately 2" x 5" x 10 mil (50.8 mm x 127 mm x 0.025 mm) of adhesive prepared was applied to both of the two anodized aluminum adherends. 10 mil (0.025 mm) thick spacers made from brass shims were applied to the edges of the bonded area for bondline thickness control. The bond was closed and adhesive tape was applied to hold the adherends together during the cure. The adhesive bonds were placed between sheets of aluminum foil and also between pieces of cardboard. Four 14 pound (6.350 g) steel plates were used to apply pressure to provide for adhesive spreading. The assembly was placed into an oven heated to 130°C for 1 hour and the samples were then tested at room temperature after cooling or when they were hot as specified.

If the material had to be coated hot (as specified for specific examples), anodized 7075 T6 aluminum substrates and the shear sample knife (10 mil gap, 0.025 mm) and the peel sample knife (10 mil gap, 0.025 mm) were all kept at 100° C oven, and used to spread the adhesive immediately after their removal therefrom, using the T-peel and shear procedure detailed above. Furthermore, samples were coated with the adhesive while the adherends were placed on top of a hot plate surface kept at 100° C.

After the adhesive had been allowed to cool to room temperature, the larger specimen was cut into 1" (2.54 cm) wide samples, yielding two 1" (2.54 cm) wide specimens. The bonds were tested to failure at room temperature on a Sintech Tensile Testing machine using a crosshead displacement rate of 12"/min (30.48 cm/min). The initial part of the loading data was ignored. The average load was measured after about 1" (2.54 cm) was peeled. The T-peel strength is the average of three peel measurements.

### Preparative Examples

### Benzoxazines B, and C

Benzoxazine B, derived from a poly(ethylene oxide) diamine, was prepared by combining a mixture of Jeffamine D-400™ diamine (43 grams, 0.1 mol), paraformaldehyde (13.2 grams, 0.44 mol,) and phenol (18.8 grams, 0.2 mol) in a 2L round bottom flask, equipped with a reflux condenser. Then the mixture was heated to 100° C for 10 hours. The reaction mixture was allowed to cool and the water of condensation was removed under reduced pressure. The resulting product (approx 95% yield, structure confirmed by NMR) was used without any further purification.

Using the same procedure, Benzoxazine C was prepared using diamine JEFFAMINE™ D2000.

### DEG-SbF₅ acid catalyst

The catalyst may be prepared according to the procedure as disclosed in U.S. 4,503,211 (Robins) but without using a hindered amine. A representative preparation is as follows:

Into a 100 ml 3-neck flask equipped with a stirrer, addition funnel, thermometer, and apparatus for exclusion of atmospheric moisture was placed 21.7 g (0.2 mole) diethylene glycol (DEG). The flask was fitted with an ice water bath and the contents cooled to about 5° C. To the cooled contents was added dropwise over a 10 minute period via the addition funnel, while stirring the mixture, 21.7 (0.1 mole) g of antimony pentafluoride. This product was designated as catalyst " DEG*SbF₅".

### Examples 1-13

Benzoxazines mixed at a ratio as specified were heated to 130° C for 30 minutes in a metal container. The mixture was stirred, allowed to cool to ca. 100° C and 5% of DEG*SbF₅ catalyst was added there into. The resultant solution was then cast into a silicone mold, sandwiched between two silicone release liner coated PET sheets. Said mold consisted of ca. 1 mm thick sheet with rectangular cutouts (approximately 5 mm wide x 30 mm long) and square cutouts (ca. 10 mm x 10 mm) to prepare samples for the dynamic mechanical analysis.

The assembly was then clamped between two glass sheets and allowed to cure at 177° C for 30 minutes. The clamped assembly was then allowed to cool to room temperature, and the samples were then removed and evaluated using a Seiko Instruments Dynamic Mechanical Analyzer (DMA) in tensile mode in the temperature range between-80° C and 300° C. The cured samples were transparent, deep amber in color. After the run was completed, the sample was removed, examined visually and repositioned for the subsequent DMA run. Ultimately, the samples were cycled 4 times between -80° C and 300° C with the heating rate of 2° C/min. The samples noticeably darken with each run, but remained translucent.

Samples containing benzoxazines A and C in the varying amounts are shown in Table 1. In all cases, the resultant benzoxazine copolymer was deep amber in color and transparent. However, with the increasing amounts of Benzoxazine C, the copolymer became increasingly softer and more flexible. With the compositions where Benzoxazine C was the majority component, the copolymer was bendable. The 80% and 90% Benzoxazine C samples were soft and tacky, and could not be easily handled at room temperature.

### Example 14

To 4 grams of Benzoxazine A was added 16 grams of Benzoxazine B. The mixture was placed into an oven at 130° C for 20 minutes. Upon removal from the oven, it was vigorously stirred and approximately 1 gram of DEG*SbF5 adduct was admixed while the solution was still hot. The mixture was then placed into an oven at 90° C-100° C while the utensils and other solutions for hot-coating were prepared.

### Example 15

To 4 grams of Benzoxazine A was added 8 grams of Benzoxazine B, and 8 grams of Benzoxazine B* (with 25% by weight silicone core-shell particles). The mixture was placed into an oven at 130° C for 20 minutes. Upon removal from the oven, it was vigorously stirred and approximately 1 gram of DEG*SbF5 adduct was admixed while the solution was still hot. The mixture was then placed into an oven at 90° C-100° C while the utensils and other solutions for hot-coating were prepared. Then the reaction mixture kept at 100° C was applied onto the anodized aluminum substrates while said substrates were at room temperature.

### Example 16

To 4 grams of Benzoxazine A was added 8 grams of Benzoxazine B, and 8 grams of Benzoxazine B* (with 25% by weight silicone core-shell particles). The mixture was placed into an oven at 130° C for 20 minutes. Upon removal from the oven, it was vigorously stirred and approximately 1 gram of DEG*SbF₅ adduct was admixed while the solution was still hot. The mixture was then placed into an oven at 90-100°C while the utensils and other solutions for hot-coating were prepared. Then the reaction mixture kept at 100°C was applied onto the anodized aluminum substrates while said substrates were 100°C.

### Example 17

20 grams of Benzoxazine A was heated in an oven at 130° C, and to it approximately I gram of DEG*SbF₅ (0.0023 m) adduct was admixed while the solution was still hot. The mixture was then placed into an oven at 90° C-100° C while the utensils and other solutions for hot-coating were prepared.

### Example 18

To 20 grams of Kaneka sample Benzoxazine A* and 0.6 grams of DEG*SbF₅ adduct were admixed. The solution was kept covered until knife-coating which was done at room temperature.

### Comparative Example 19

To 4 grams of Benzoxazine A was added 8 grams of Benzoxazine B, and 8 grams of Benzoxazine B* (with 25% by weight silicone core-shell particles). The mixture was placed into an oven at 130° C for 20 minutes. Upon removal from the oven, it was vigorously stirred and approximately 0.688 gram (0.0023 m) of SbCl₅ [Aldrich] adduct was admixed while the solution was still hot. The mixture was then placed into an oven at 90° C-100° C while the utensils and other solutions for hot-coating were prepared.

### Comparative Example 20

9 grams (0.03 m) of SbCl₅ [Aldrich] were added dropwise to 6.36 grams (0.6 m) of DEG while stirring to prepare a pentachloride analogue of the DEG*SbF₅ adduct. To 4 grams of Benzoxazine A was then added 8 grams of Benzoxazine B, and 8 grams of Benzoxazine B* with silicone core-shell particles (25% by weight). The mixture was placed into an oven at 130° C for 20 minutes. Upon removal from the oven it was vigorously stirred and approximately 1.18 grams of the DEG*SbCl₅ adduct were then added. The mixture was then placed into an oven at 90° C-100° C while the utensils and other solutions for hot-coating were prepared.

**Table 1**

| Ex No. | Benzoxazine | | DEG*SbF₅ | Comments |
|---|---|---|---|---|
| | A | C | % | |
| 1 | 90 | 10 | 5 | |
| 2 | 80 | 20 | 5 | |
| 3 | 75 | 25 | 5 | |
| 4 | 70 | 30 | 5 | |
| 5 | 67 | 33 | 5 | |
| 6 | 60 | 40 | 5 | |
| 7 | 50 | 50 | 5 | See Fig. 1 for DMA results |
| 8 | 40 | 60 | 5 | |
| 9 | 33 | 67 | 5 | |
| 10 | 30 | 70 | 5 | |
| 11 | 25 | 75 | 5 | |
| 12 | 20 | 80 | 5 | Soft and tacky at room temperature |
| 13 | 10 | 90 | 5 | Soft and tacky at room temperature |

**Table 2**

| Ex No. | Benzoxazine | | DEG*SbF₅ | Overlap Shear (Avg+/-STD) | T-Peel (Avg+/-STD) |
|---|---|---|---|---|---|
| | A | B | % | | Avg STD |
| 14 | 20 | 80 | 5 | 659 +/- 25 | 0.89 +/- 0.21 |
| 15 | 20 | 80 | 5 | 1370 +/- 64 | 1.1 +/- 0.27 |
| 16 | 20 | 80 | 5 | 2969 +/- 202 | 6.4 +/- 1.56 |
| 17 | 100 | | 5 | 150 +/- 5 | 0.41 +/- 0.024 |
| 18 | 100 | | 5 | 2298 +/- 238 | 3.2 +/- 1.44 |
| C19 | 20 | 80 | 5 ¹⁾ | 2280 +/- 74 | 1.01 +/- 0.23 |
| C20 | 20 | 80 | 5 ¹⁾ | 2007 +/- 47 | 0.81 +/- 0.10 |

| | | | | | |
|---|---|---|---|---|---|
| ¹⁾ SbCl₅ instead of SbF₅ used. | | | | | |

## Claims

1. A polymerizable composition comprising:
a) a benzoxazine, and
b) a substituted pentafluoroantimonic acid catalyst having the general formula H⁺SbF₅OR⁻ wherein OR⁻ is the residue of an aliphatic or aromatic alcohol.

2. The polymerizable composition of claim 1, wherein said OR group is 2-(2-hydroxyethoxy)ethoxy.

3. The polymerizable composition of claim 1, wherein said OR group is the residue of an aliphatic alcohol having a molecular weight of at least 32 and a primary or secondary hydroxyl functionality of at least 1.

4. The polymerizable composition of claim 1 further comprising a toughening agent, wherein said toughening agent is present at between 3% and 35% by weight of the benzoxazine.

5. The polymerizable composition of claim 1, wherein said toughening agent is a polymeric compound having both a rubbery phase and a thermoplastic phase.

6. The polymerizable composition of claim 5, wherein said toughening agent is a graft polymer having a polymerized, diene, rubbery core and a shell grafted thereto of an acrylic acid ester, a methacrylic acid ester, a monovinyl aromatic hydrocarbon, or a mixture thereof.

7. The polymerizable composition of claim 5, wherein said toughening agent is a core-shell polymer wherein the core is a rubbery polyacrylate polymer having a glass transition temperature below 0° C. and the shell is grafted thereto and is a thermoplastic polyacrylate polymer having a glass transition temperature above 25° C.

8. The polymerizable composition of claim 4, wherein said toughening agent is an elastomeric particle having a T_{g} below 25° C that is a polymerized mixture of free-radical polymerizable monomers and a polymeric stabilizer that is soluble in the curable composition.

9. The polymerizable composition of claim 1 comprising a mixture of benzoxaxines derived from both aliphatic and aryl amines.

10. The polymerized composition of claim 1 comprising one or more polymers of the formula: 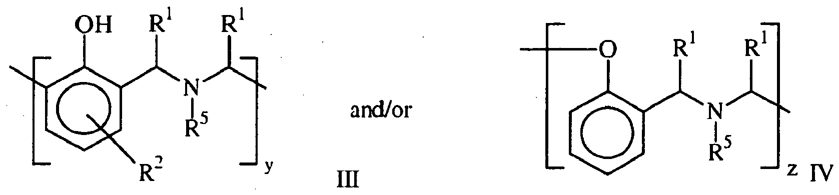 each R¹ is H or an alkyl group, and is the residue of an aliphatic aldehyde,
R² is H, a covalent bond, or a polyvalent (hetero)hydrocarbyl group, preferably H, a covalent bond or a divalent alkyl group;
R⁵ is the (hetero)hydrocarbyl residue of a primary amino compound, R⁵(NH₂)ₘ, where m is 1-4; and
y + z is at least 2, and
the residue of the catalyst.

## Patentansprüche

1. Polymerisierbare Zusammensetzung, umfassend:
a) ein Benzoxazin und
b) eine substituierte Pentafluorantimonsäure als Katalysator mit der allgemeinen Formel H⁺SbF₅OR⁻, wobei OR⁻ für den Rest eines aliphatischen oder aromatischen Alkohols steht.

2. Polymerisierbare Zusammensetzung nach Anspruch 1, wobei es sich bei der OR-Gruppe um 2-(2-Hydroxyethoxy)ethoxy handelt.

3. Polymerisierbare Zusammensetzung nach Anspruch 1, wobei es sich bei der OR-Gruppe um den Rest eines aliphatischen Alkohols mit einem Molekulargewicht von mindestens 32 und einer prim.- oder sec.-Hydroxylfunktionalität von mindestens 1 handelt.

4. Polymerisierbare Zusammensetzung nach Anspruch 1, ferner umfassend einen Schlagzähigkeitsverbesserer, wobei der Schlagzähigkeitsverbesserer in einer Menge zwischen 3 und 35 Gew.-%, bezogen auf das Benzoxazin, vorliegt.

5. Polymerisierbare Zusammensetzung nach Anspruch 1, wobei es sich bei dem Schlagzähigkeitsverbesserer um eine polymere Verbindung, die sowohl eine kautschukartige Phase als auch eine thermoplastische Phase aufweist, handelt.

6. Polymerisierbare Zusammensetzung nach Anspruch 5, wobei es sich bei dem Schlagzähigkeitsverbesserer um ein Pfropfpolymer mit einem polymerisierten kautschukartigen Dienkern und einer darauf aufgepfropften Schale aus einem Acrylsäureester, einem Methacrylsäureester, einem monovinylaromatischen Kohlenwasserstoff oder einer Mischung davon handelt.

7. Polymerisierbare Zusammensetzung nach Anspruch 5, wobei es sich bei dem Schlagzähigkeitsverbesserer um ein Kern-Schale-Polymer handelt, wobei der Kern ein kautschukartiges Polyacrylatpolymer mit einer Glasübergangstemperatur von weniger als 0°C ist und die Schale darauf aufgepfropft ist und ein thermoplastisches Polyacrylatpolymer mit einer Glasübergangstemperatur von mehr als 25°C ist.

8. Polymerisierbare Zusammensetzung nach Anspruch 4, wobei es sich bei dem Schlagzähigkeitsverbesserer um ein elastomeres Teilchen mit einer T_{g} von weniger als 25°C handelt, das eine polymerisierte Mischung von radikalisch polymerisierbaren Monomeren und einem polymeren Stabilisator, der in der härtbaren Zusammensetzung löslich ist, handelt.

9. Polymerisierbare Zusammensetzung nach Anspruch 1, umfassend eine Mischung von Benzoxazionen, die sich sowohl von aliphatischen Aminen als auch von Arylaminen ableiten.

10. Polymerisierte Zusammensetzung nach Anspruch 1, umfassend ein oder mehrere Polymere der Formel: 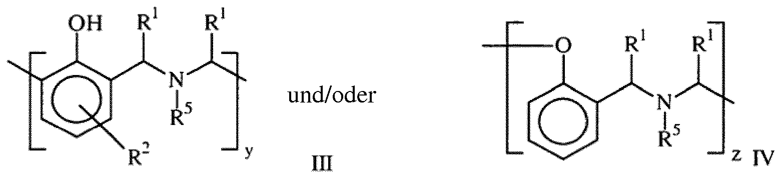 wobei
R¹ jeweils für H oder eine Alkylgruppe steht und der Rest eines aliphatischen Aldehyds ist,
R² für H, eine kovalente Bindung oder eine mehrwertige (Hetero)-Hydrocarbylgruppe, vorzugsweise H, eine kovalente Bindung oder eine zweiwertige Alkylgruppe, steht;
R⁵ für den (Hetero)Hydrocarbylrest einer primären Aminoverbindung, R⁵(NH₂)ₘ, steht, wobei m für 1-4 steht; und
y + z mindestens gleich 2 ist, und
den Rest eines Katalysators.

## Revendications

1. Composition polymérisable comprenant :
a) une benzoxazine, et
b) un catalyseur de type acide pentafluoroantimonique substitué de formule générale H⁺SbF₅OR dans laquelle OR⁻ est le résidu d'un alcool aliphatique ou aromatique.

2. Composition polymérisable selon la revendication 1, dans laquelle ledit groupe OR est un groupe 2-(2-hydroxyéthoxy)éthoxy.

3. Composition polymérisable selon la revendication 1, dans laquelle ledit groupe OR est le résidu d'un alcool aliphatique ayant une masse moléculaire d'au moins 32 et comportant au moins 1 groupe fonctionnel hydroxyle primaire ou secondaire.

4. Composition polymérisable selon la revendication 1 comprenant en outre un agent renforçant la résistance, dans laquelle ledit agent renforçant la résistance est présent dans une proportion comprise entre 3% et 35% en poids de la benzoxazine.

5. Composition polymérisable selon la revendication 1, dans laquelle ledit agent renforçant la résistance est un composé polymère comportant à la fois une phase caoutchouteuse et une phase thermoplastique.

6. Composition polymérisable selon la revendication 5, dans laquelle ledit agent renforçant la résistance est un polymère de greffage comportant un noyau caoutchouteux diénique polymérisé et une coque qui y est greffée d'un ester d'acide acrylique, d'un ester d'acide méthacrylique, d'un hydrocarbure monovinyl-aromatique, ou d'un mélange de ceux-ci.

7. Composition polymérisable selon la revendication 5, dans laquelle ledit agent renforçant la résistance est un polymère noyau-coque dans lequel le noyau est un polymère polyacrylate caoutchouteux ayant une température de transition vitreuse inférieure à 0°C et la coque y est greffée et est un polymère polyacrylate thermoplastique ayant une température de transition vitreuse supérieure à 25°C.

8. Composition polymérisable selon la revendication 4, dans laquelle ledit agent renforçant la résistance est une particule élastomère ayant une T_{g} inférieure à 25°C qui est un mélange polymérisé de monomères polymérisables par voie radicalaire et d'un stabilisant polymère qui est soluble dans la composition durcissable.

9. Composition polymérisable selon la revendication 1 comprenant un mélange de benzoxaxines dérivées à la fois d'amines aliphatiques et d'arylamines.

10. Composition polymérisée selon la revendication 1 comprenant un ou plusieurs polymères de formule : 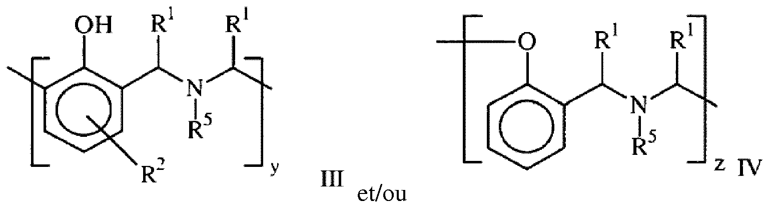 chaque radical R¹ représente H ou un groupe alkyle, et est le résidu d'un aldéhyde aliphatique,
R² représente H, une liaison covalente, ou un groupe (hétéro)hydrocarbyle polyvalent, de préférence H, une liaison covalente ou un groupe alkyle divalent ; R⁵ représente le résidu (hétéro)hydrocarbyle d'un composé amino primaire, R⁵(NH₂)ₘ, où m a une valeur de 1-4 ; et
y + z est au moins égal à 2, et
le résidu du catalyseur.
